# FASCICULE DE BREVET EUROPEEN

(11) **EP 2 605 475 B1**
(45) Date de publication et mention de la délivrance du brevet: **08.07.2015**
(21) Numéro de dépôt: 13151423.4
(22) Date de dépôt: 04.03.2010
(51) Int. Cl.: H04L 29/06, H04L 29/14

(54) **Procédé et dispositif de transmission robuste de flux de paquets de données à en-têtes compressés sans augmentation de débit**
Verfahren und Vorrichtung zur robusten Übertragung von Datenpaketströmen mit komprimierten Datenköpfen ohne Durchsatzsteigerung
Method and device for robust transmission of data packet streams with compressed headers with no bandwidth increase

(30) Priorité: 13.03.2009 FR 0901186
(43) Date de publication de la demande: 19.06.2013
(62) Demande divisionnaire de: 10707019.5
(73) Titulaire: Thales, 92200 Neuilly Sur Seine (FR)
(72) Inventeur: Baudoin, Cédric, 31400 TOULOUSE (FR); Arnal, Fabrice, 31000 TOULOUSE (FR); Lacan, Jérôme, 31400 TOULOUSE (FR)
(74) Mandataire: Hammes, Pierre

(56) Documents cités:
- DATABASE WPI Week 200468 Thomson Scientific, London, GB; AN 2004-696130 XP002564400, -& JP 2004 282197 A (NEC CORP) 7 octobre 2004 (2004-10-07) -& JP 2004 282197 K1 7 octobre 2004 (2004-10-07)
- LIEBL G ET AL: "Enhanced packet-based transmission of multi-rate signals over GERAN", PERSONAL, INDOOR AND MOBILE RADIO COMMUNICATIONS, 2004. PIMRC 2004. 15 TH IEEE INTERNATIONAL SYMPOSIUM ON BARCELONA, SPAIN 5-8 SEPT. 2004, PISCATAWAY, NJ, USA,IEEE, PISCATAWAY, NJ, USA, vol. 3, 5 septembre 2004 (2004-09-05), pages 1812-1816, XP010754253, ISBN: 978-0-7803-8523-8
- QUALCOMM EUROPE S A R L: "Selection of application data packet sizes for MBMS", 3GPP DRAFT; R2-051932, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. London, UK; 20050824, 24 août 2005 (2005-08-24), XP050129084,

## Description

La présente invention a pour objet un procédé et un dispositif d'amélioration de la robustesse de flux de paquets à en-têtes compressés par insertion de redondance sans augmentation du débit et/ou de la bande passante.

Le champ d'application de l'invention est notamment celui des réseaux de communication utilisant le protocole internet IP (Internet Protocol) mettant en oeuvre des techniques de compression d'en-têtes réseau sur les paquets transmis afin d'optimiser la bande passante en supprimant les informations redondantes au sein d'un en-tête réseau et/ou entre plusieurs en-têtes réseau successifs.

Les techniques de compression d'en-têtes sont mises en oeuvre sur des flux de données, par exemple des données multimédia, transmises sous forme de paquets à travers un empilement de couches protocolaires caractéristiques d'un réseau de communication IP. On peut citer, notamment, la couche réseau mettant en oeuvre, par exemple, le protocole internet IP , la couche transport mettant en oeuvre, par exemple, le protocole de datagramme utilisateur plus connu sous l'acronyme anglo-saxon UDP (User Datagram Protocol) ou le protocole de communication temps-réel RTP (Real Time Transport Protocol). Toutes ces couches protocolaires ont notamment pour effet d'ajouter un en-tête protocolaire, contenant une série de champs d'information, aux paquets de données initialement transmis. Les paquets résultants de cet empilement obtenus au niveau de la couche réseau voient alors leur taille considérablement augmentée par rapport à la taille du paquet de données initial.

Un réseau de communication IP comprend également un réseau d'accès qui peut être un réseau d'accès radio capable de transmettre les paquets de la couche réseau vers le médium physique de communication qui, notamment dans le cas d'une transmission sans fil, peut présenter une bande passante contrainte. Dans ce contexte où les ressources disponibles sur le medium de transmission sont réduites, il est connu d'utiliser des schémas de compression d'en-têtes réseau afin de diminuer la taille des paquets à transmettre sans affecter les données utiles.

Une des techniques de compression d'en-tête connue de l'Homme du métier est décrite par le standard ROHC (Robust Header Compression) normalisé par le comité IETF à travers les RFC 3095 et afférentes. Cette technique définit une pluralité de paquets compressés à des niveaux différents ainsi qu'un ensemble d'algorithmes permettant d'une part la compression des champs contenus dans les en-têtes réseau et d'autre part le séquencement des transitions entre les différents états de compression disponibles. De façon générale, la technique de compression ROHC, comme l'ensemble des techniques connues de compression d'en-tête, s'appuie sur l'échange d'un contexte initial entre le compresseur situé du coté de la source d'émission des paquets et le décompresseur situé du coté du destinataire qui reçoit ces mêmes paquets. Dans un second temps, seuls les champs des en-têtes variables sont transmis après avoir été codés de façon différentielle afin d'améliorer la performance de la compression.

De façon générale, l'invention s'applique à tout dispositif devant émettre des flux de données IP vers un medium de transmission à bande passante contrainte et ce via une couche d'accès délivrant des cellules de taille fixe encapsulant lesdites données IP.

Un des problèmes principaux des mécanismes de compression d'en-têtes introduits précédemment réside dans le fait que la transmission des paquets peut être entachée d'erreurs dues notamment aux phénomènes de propagation intervenant sur le canal physique. Ces erreurs peuvent entraîner la perte de paquets et, dans le cas de paquets à en-têtes compressés, engendrer une désynchronisation entre les entités de compression et de décompression. Cette désynchronisation conduit, généralement, à perdre l'ensemble des paquets suivants jusqu'à une réinitialisation du contexte du décompresseur. Les pertes de paquets peuvent également être liées à un phénomène de congestion conduisant à une saturation des mémoires tampons (connues également sous le terme anglo-saxon « buffers ») de la couche d'accès au médium de transmission. Ce phénomène a de plus pour caractéristique de provoquer des pertes de paquets en rafale très pénalisantes pour maintenir la synchronisation des entités de compression et de décompression.

Le problème se pose alors d'améliorer la robustesse de ces schémas de compression afin de limiter les pertes de paquets sans diminuer les performances globales de la compression et sans augmenter le débit de transmission des données.

Les techniques connues de compression d'en-tête, comme le standard ROHC, prennent en compte la problématique de robustesse aux erreurs de transmission par le biais d'algorithmes de codage des champs variables, par exemple l'algorithme à fenêtre glissante W-LSB (Weighted Least Significant Bit) permettant au décompresseur de s'affranchir d'un certain nombre d'erreurs consécutives. L'augmentation du niveau de robustesse de ce mécanisme s'accompagne directement d'une réduction du niveau de compression. Néanmoins, ces algorithmes ne permettent pas dans tous les cas de maintenir la synchronisation entre le compresseur et le décompresseur et sont source d'une complexité de mise en oeuvre importante. Enfin, elles ne prennent pas en compte les contraintes des couches inférieures à la couche réseau, notamment la couche d'accès.

En effet, dans un réseau de communication, la couche d'accès, et notamment la couche d'accès radio, impose parfois une transmission de données sous forme de cellules, par exemple des cellules de type ATM (« Asynchronous Transfer Mode »), ayant une taille fixe donnée. Ces cellules sont obtenues par concaténation et/ou segmentation des paquets réseau à en-tête compressé ce qui a pour effet d'engendrer l'utilisation de bits dits de bourrage ou « padding » en anglais. Ces bits de bourrage ne contiennent aucune information utile et sont insérés dans l'unique but de respecter la taille fixée a priori des cellules.

La demande de brevet français FR 2907624 propose une méthode de compression d'en-tête qui prend en compte la taille des cellules de la couche d'accès afin d'en minimiser le nombre, cependant cette méthode a pour inconvénients d'être d'une part non compatible avec les standards de compression d'en-tête couramment utilisés dans de nombreuses infrastructures de réseau de communication, en particulier le standard ROHC, et d'autre part d'être moins performante en termes de gain de compression que les standards issus des travaux de l'IETF tels que ROHC.

La demande de brevet japonaise JP 2004 282197 propose une méthode permettant d'exploiter des sections de bourrage au sein de paquets fragmentés pour y insérer des données de redondance mais ne traite pas de la problématique précise de la robustesse aux erreurs des entêtes compressés.

L'invention est définie dans les revendications independantes 1 et 4.

La présente invention propose notamment d'exploiter les bits utilisés habituellement pour servir de bourrage présents dans les cellules générées au niveau de la couche d'accès afin de les remplacer par une information redondante permettant d'améliorer significativement la robustesse des en-têtes réseau compressés et ce sans dégrader les performances globales en terme de gain de compression.

A cet effet l'invention a pour objet un procédé de transmission robuste d'un flux de données selon la revendication 1.

Dans une variante de réalisation de l'invention le protocole ROHC ou le protocole IPHC est utilisé pour la compression d'en-tête.

Dans une variante de réalisation de l'invention le protocole ATM ou le protocole MPEG-TS est utilisé pour ladite fragmentation des paquets à en-tête compressé.

L'invention a également pour objet un système de transmission robuste d'un flux de données de paquets à en-têtes compressés comportant un émetteur et un récepteur, caractérisé en ce que ledit émetteur comporte des moyens pour exécuter les étapes du procédé décrit précédemment.

D'autres caractéristiques et avantages de la présente invention apparaîtront mieux à la lecture de la description qui suit en relation aux dessins annexés qui représentent :
La figure 1, une illustration du phénomène de désynchronisation due à une perte de paquets successifs au sein d'un flux de paquets à en-têtes compressés,
La figure 2, un schéma du positionnement de l'invention au sein des différentes couches protocolaires mises en oeuvre dans le cadre d'une transmission de paquets à en-têtes IP compressés,
Les figures 3 et 4, deux illustrations de l'exploitation des bits de bourrage prévus par la couche d'accès afin d'améliorer la robustesse de l'en-tête compressé du paquet selon l'invention,

Afin de mieux faire comprendre le procédé selon l'invention la description qui suit est donnée dans le cadre d'une application de transmission de paquets à en-têtes IP compressés mettant en oeuvre, par exemple le protocole ROHC, au travers d'une couche d'accès radio respectant le protocole de segmentation/réassemblage AAL5 (ATM Adaptation Layer 5) des cellules ATM. Ce cadre est utilisé à titre illustratif et nullement limitatif étant entendu que le procédé selon l'invention peut s'appliquer à tout type de mécanisme de compression d'en-têtes ainsi qu'à toute méthode d'accès radio utilisant un mécanisme de segmentation/réassemblage des paquets à en-têtes compressés afin de produire des cellules de données de taille fixée a priori, induisant implicitement la présence de bits de bourrage au sein desdites cellules. En particulier, le cas d'utilisation du standard MPEG-TS (Moving Picture Expert Group - Transport Stream) est également compatible de la présente invention. En effet, ce dernier définit, notamment, l'encapsulation de données multimédia dans des paquets destinés au transport à travers un réseau de communication à protocole internet. On peut citer enfin le cas du standard DVB-S2 (Digital Video Broadcasting Satellite-Second Generation) qui est compatible de la présente invention au titre de l'encapsulation de paquets à en-tête compressés dans des trames de couche physique standardisées sous l'appellation « BBFrames ».
De plus, d'autres méthodes de compression d'en-tête existent auxquelles l'invention peut également s'appliquer, en particulier le protocole IPHC (IP Header Compression over PPP) normalisé via le RFC 2509 par le comité de standardisation IETF. La suite de la description est effectuée en prenant l'exemple du protocole ROHC étant entendu que tout autre mécanisme de compression d'en-tête est également compatible de l'invention.

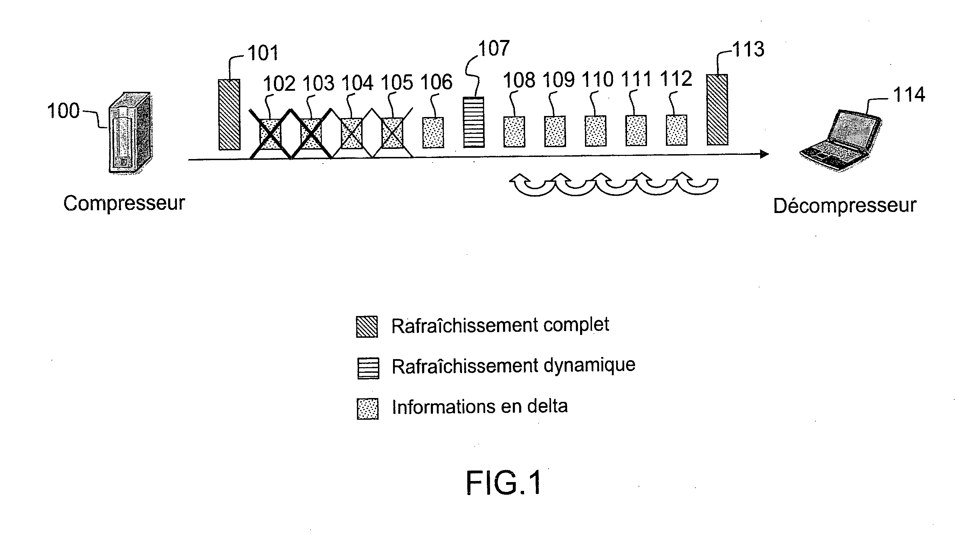

La figure 1, illustre un scénario de transmission de paquets à en-têtes compressés selon l'art antérieur soumis à des erreurs et son influence sur la robustesse globale de la méthode de compression d'en-tête.
Un terminal 100 dans lequel est mis en oeuvre un mécanisme de compression d'en-tête connu, par exemple un mécanisme conforme au standard ROHC, transmet un flux de paquets dont les en-têtes 101-113 varient en taille en fonction du niveau de compression qui leur est appliqué. L'en-tête 101 correspond à un rafraîchissement complet du contexte permettant au compresseur 100 et au décompresseur 114 de rester synchronisés. Les en-têtes 102,103,104,105,106 sont ensuite transmis avec un niveau de compression plus élevé que celui utilisé pour compresser l'en-tête de rafraichissement 101 en codant les champs d'information de façon différentielle par rapport au paquet précédent. Si une erreur, due par exemple à la non fiabilité du lien de transmission ou à des phénomènes de congestion de paquets, apparaît sur l'en-tête 102, le contexte du décompresseur 114 n'est plus à jour et une désynchronisation apparaît entraînant potentiellement la perte de tous les paquets à en-tête compressé suivants 103,104,105,106 jusqu'à réception d'un paquet comportant une en-tête de rafraîchissement dynamique 107 qui permet de remettre à jour le contexte du décompresseur 114. Les paquets suivants 108,109,110,111,112 peuvent alors être à nouveau compressés avec un niveau de compression plus important que celui utilisé pour compresser l'en-tête 107.

L'illustration précédente amène au constat que le respect des performances en gain de compression des mécanismes existant de compression d'en-tête réseau entraîne une sensibilité importante aux erreurs pouvant entraîner des pertes de paquets conséquentes au sein d'un flux de données transmis auquel sont appliqués lesdits mécanismes.

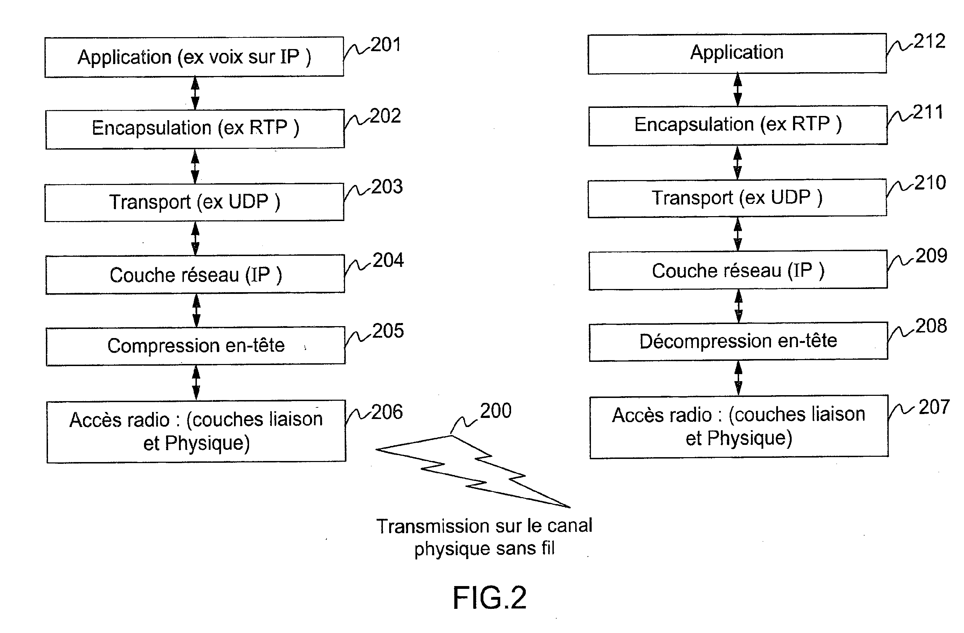

La figure 2 schématise les différentes étapes de l'empilement protocolaire que subit un paquet de données généré par une couche d'application 201 mettant en oeuvre, par exemple, une application multimédia de voix sur IP ou de diffusion de contenu vidéo. Les paquets de données générés par la couche d'application 201 sont ensuite transmis aux couches inférieures d'encapsulation 202, de transport 203 et réseau 204 qui tour à tour rajoutent un en-tête protocolaire spécifique audit paquet de données. Les protocoles mis en oeuvre au sein des couches 202,203 et 204 sont, par exemple, les protocoles respectifs RTP, UDP et IP. Un mécanisme de compression d'en-tête standard comportant une étape d'amélioration de la robustesse selon l'invention est mis en oeuvre au sein de la couche de compression d'en-tête 205. Le procédé selon l'invention utilise certaines informations provenant de la couche d'accès radio 206, en particulier la taille d'une cellule ATM afin de mettre en oeuvre l'optimisation de la compression au sein de la couche 205. Les paquets sont ensuite transmis via un canal physique de transmission sans fil 200 vers un récepteur distant (coté droit de la figure 2). Ce récepteur reçoit les données au niveau de sa couche accès radio 207 puis les transmet à une étape de décompression d'en-tête selon l'invention 208. Les données obtenues avec en-têtes décompressés sont ensuite transmises vers la couche réseau IP 209 puis vers la couche transport 210 avant d'être désencapsulées 211 puis transmises à l'application destinataire 212.

L'invention se situe donc au niveau des couches 205,208 réalisant le mécanisme de compression et décompression d'en-tête. Elle nécessite des informations provenant de la couche d'accès radio 206,207, notamment la taille des cellules ATM.

Dans un premier type de réalisation, l'invention consiste à modifier le choix du type d'en-tête compressé naturellement déterminé par un mécanisme de compression d'en-tête, par exemple conforme au standard ROHC, en prenant en compte les contraintes liées à l'encapsulation des paquets compressés via la couche d'accès.

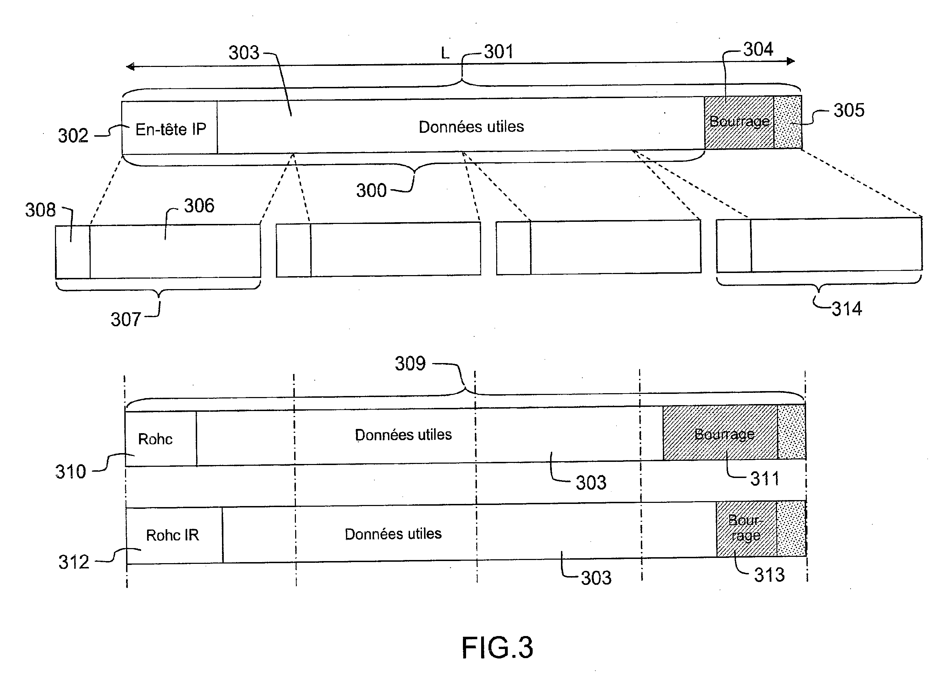

La figure 3 illustre l'application du procédé selon l'invention dans le cas d'un paquet 300 composé d'un en-tête réseau 302 et d'une section de données utiles 303, par exemple un paquet IP, encapsulé dans une unité de données protocolaires 301, ou PDU (« Protocol Data Unit ») de la couche d'accès dont la taille L est un multiple de la taille de la section utile d'une cellule ATM 306. Ladite unité de données protocolaires 301 comporte une section de bourrage 304 utilisée pour compléter le paquet afin d'obtenir la taille fixée par l'application, ainsi qu'éventuellement un suffixe 305. Une cellule ATM 307 comprend un en-tête 308 et une section utile 306 générée en fragmentant l'unité de données protocolaires 301 en un nombre de sections égal au rapport entre la taille L de l'unité de données protocolaires 301 et la taille fixée a priori de la section utile 306 d'une cellule ATM 307. Dans l'exemple illustré à la figure 3, le nombre de cellules ATM obtenues après fragmentation est de quatre. Un mécanisme de compression d'en-tête selon l'art antérieur permet d'obtenir, à partir de l'en-tête réseau 302, un en-tête compressé 310 avec un niveau de compression maximal. L'unité de données protocolaires 309 obtenue par encapsulation du paquet compressé contenant l'en-tête compressé 310 et la section utile 303 présente une section de bourrage 311 importante. Les tailles respectives des unités de données protocolaires 301 et 309 étant les mêmes, le schéma de compression utilisé ne présente pas, in fine, un gain de compression important puisqu'il engendre la génération du même nombre de cellules ATM que dans le cas d'un en-tête réseau non compressé 302. De plus, le fait d'utiliser un en-tête fortement compressé est susceptible de dégrader la performance en termes de pertes paquets comme illustré précédemment à l'appui de la figure 1. Le procédé selon l'invention consiste alors à utiliser l'information de taille de l'unité de données protocolaires 301 afin de prédire l'en-tête compressé le plus adapté à utiliser afin d'offrir le meilleur compromis entre robustesse aux erreurs et taux de compression. Dans le cas illustré à la figure 3, un en-tête de rafraîchissement 312 présentant un taux de compression faible et une robustesse aux erreurs accrues est plus adapté car son utilisation permet de diminuer la taille de la section de bourrage 313. En particulier, l'utilisation de cet en-tête de rafraîchissement appelé également en-tête de synchronisation permet au décompresseur de se re-synchroniser et donc de réduire les risques de propagation d'erreurs se produisant lors de rafales de pertes de paquets précédant la réception. Un en-tête de niveau de compression moindre 312 peut également être utilisé, celui-ci permet d'accroître le nombre de bits utilisés pour le codage des champs d'en-tête et donc d'augmenter la robustesse aux pertes successives.

De façon plus générale, le procédé selon l'invention vise à remplacer tout ou partie de la section de bourrage 304, 311,313, si elle existe, par une section de données de redondance, la dite section étant issue, par exemple, de l'utilisation d'un en-tête compressé de rafraîchissement ou de niveau de compression moindre. Le choix du type d'en-tête compressé à utiliser est fait soit sur la base de la taille estimée dudit paquet comportant l'en-tête compressé soit sur sa taille réelle obtenue en le compressant via le mécanisme de compression d'en-tête. Dans le premier cas, l'estimation est faite de façon pessimiste en utilisant les informations fournies par la méthode de compression d'en-tête sur les tailles d'en-têtes compressés possibles. Dans le second cas, la connaissance de la taille réelle du paquet à en-tête compressé impose de compresser une première fois le paquet , d'en déduire sa taille, puis d'effectuer la décision consistant à modifier le type d'en-tête compressé ou pas dans le but de minimiser le nombre de cellules ATM générées.

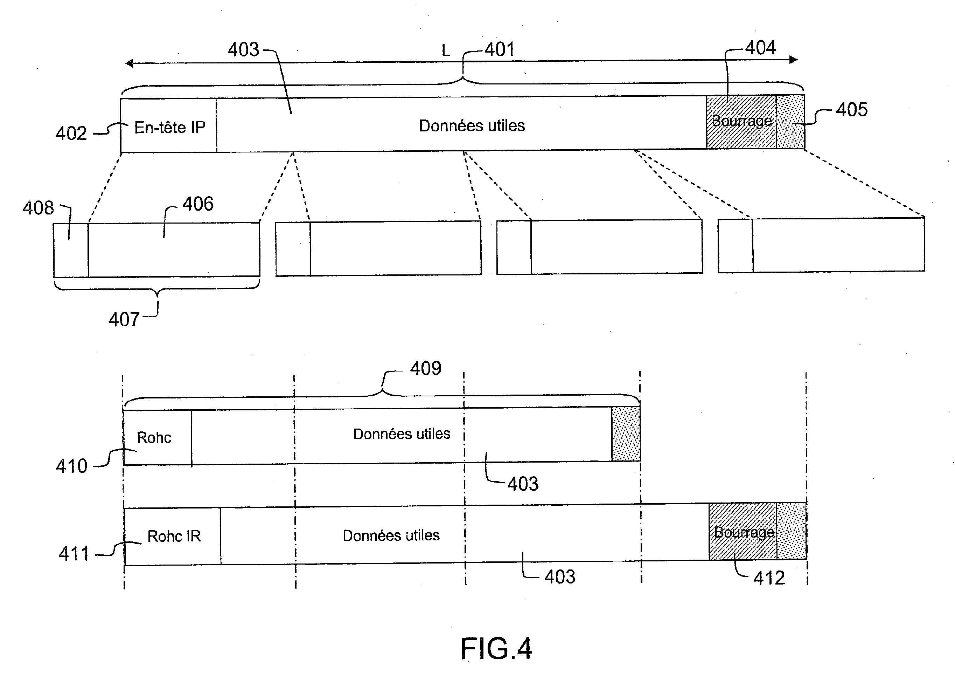

La figure 4 illustre un exemple d'utilisation du procédé selon l'invention tel que décrit pour la figure 3 mais cette fois dans un cas de figure où l'utilisation de l'en-tête compressé de niveau de compression maximum conduit à la suppression de la section de bourrage et à l'utilisation d'un nombre plus restreint de cellules ATM, dans le cas d'illustration, trois cellules seulement sont générées. L'unité de données protocolaires (PDU) 401 constitué d'un en-tête réseau 402, d'une section de données utiles 403, d'une section de bourrage 404 et d'un suffixe 405 est fragmentée en quatre cellules ATM 407 si aucune compression n'est appliquée sur l'en-tête réseau 402. Lorsqu'un mécanisme de compression d'en-tête est utilisé, il produit l'en-tête compressé 410 qui entraine une diminution notable de la taille L de l'unité de données protocolaires 401,409. La fragmentation de ladite unité 409 entraine alors la génération de seulement trois cellules ATM au lieu de quatre. Cette économie est réalisée grâce au taux de compression important obtenu sur l'en-tête compressé 410. L'utilisation d'un en-tête moins compressé, par exemple un en-tête de rafraichissement 411, bien que présentant une robustesse aux erreurs de transmission accrue, serait pénalisant du point de vue de la compression globale puisque cela amènerait à utiliser une section de bourrage 412 et une cellule ATM supplémentaire.
Dans ce cas de figure, le procédé selon l'invention conduit à choisir préférablement l'en-tête compressé qui permet de consommer le plus petit nombre de cellules ATM.

Le procédé selon l'invention présente notamment l'avantage d'améliorer de façon importante la robustesse aux erreurs du flux de paquets à en-têtes compressés sans entraîner d'augmentation de débit puisqu'il exploite les zones de bourrage déjà existantes au sein du flux et ne comportant aucune information utile.

## Revendications

1. Procédé de transmission robuste d'un flux de données sous forme de paquets Pᵢ comprenant au moins un en-tête Hᵢ (302), ledit en-tête étant compressé (310,312) par l'intermédiaire d'une première étape de compression d'en-tête, lesdits paquets étant fragmentés en une succession de cellules (307,314), lesdites cellules (307,314) ayant une taille fixe identique, ladite fragmentation entraînant l'apparition d'une section de bourrage (311) dans la dernière desdites cellules (314), ledit procédé étant tel que la place occupée par ladite section de bourrage (311) est utilisée, au moins partiellement, pour insérer des données de redondance, lesdites données de redondance ayant pour fonction d'augmenter la robustesse aux erreurs de transmission dudit entête compressé, lesdites données de redondance étant obtenues soit en réduisant le taux de compression appliqué par ladite première étape de compression d'en-tête audit en-tête Hᵢ (302), ledit taux de compression étant déterminé à partir d'une estimation de la taille du paquet à en-tête compressé soit par l'intermédiaire des étapes suivantes :
• une étape de détermination de la taille de la section de bourrage (311) à partir de la taille dudit paquet à en-tête compressé et de la taille fixe desdites cellules (307,314),
• une seconde étape de compression dudit en-tête (302) avec un taux de compression déterminé de façon à obtenir un en-tête compressé (312) dont la taille est le plus proche entier possible inférieur à la taille de ladite section de bourrage (311) et qui remplace l'en-tête compressé initialement présent (310).

2. Procédé selon la revendication 1 **caractérisé en ce que** le protocole ROHC ou le protocole IPHC est utilisé pour la compression d'en-tête.

3. Procédé selon l'une des revendications précédentes **caractérisé en ce que** le protocole ATM ou le protocole MPEG-TS est utilisé pour ladite fragmentation des paquets à en-tête compressé.

4. Système de transmission robuste d'un flux de données de paquets à en-têtes compressés comportant un émetteur et un récepteur, tel que ledit émetteur comporte des moyens pour exécuter toutes les étapes du procédé selon l'une des revendications 1 à 3.

## Patentansprüche

1. Verfahren zum robusten Übertragen eines Datenstroms in Form von Paketen Pᵢ mit wenigstens einem Header Hᵢ (302), wobei der Header durch einen ersten Header-Kompressionsschritt komprimiert (310, 312) wird, wobei die Pakete in eine Folge von Zellen (307, 314) fragmentiert werden, wobei die Zellen (307, 314) eine identische feste Größe haben, wobei die Fragmentierung dazu führt, dass eine Padding-Sektion (311) in der letzten der Zellen (314) erscheint, wobei das Verfahren derart ist, dass der von der Padding-Sektion (311) eingenommene Raum wenigstens teilweise zum Einführen von Redundanzdaten benutzt wird, wobei der Zweck der Redundanzdaten darin besteht, die Robustheit des komprimierten Headers für Übertragungsfehler zu erhöhen, wobei die Redundanzdaten entweder durch Reduzieren der im ersten Header-Kompressionsschritt auf den Header Hᵢ (302) angewandten Kompressionsrate erhalten wird, wobei die Kompressionsrate auf der Basis einer Schätzung der Größe des komprimierten Header-Pakets oder mittels der folgenden Schritte ermittelt wird:
ein Schritt des Ermittelns der Größe der Padding-Sektion (311) auf der Basis der Größe des komprimierten Header-Pakets und der festen Größe der Zellen (307, 314);
ein zweiter Schritt des Komprimierens des Headers (302) mit einer Kompressionsrate, die so ermittelt wird, dass ein komprimierter Header (312) erhalten wird, dessen Größe die nächstmögliche ganze Zahl ist, die kleiner ist als die Größe der Padding-Sektion (311), und die den anfänglich vorhandenen komprimierten Header (310) ersetzt.

2. Verfahren nach Anspruch 1, **dadurch gekennzeichnet, dass** das ROHC-Protokoll oder das IPHC-Protokoll für die Header-Kompression benutzt wird.

3. Verfahren nach einem der vorherigen Ansprüche, **dadurch gekennzeichnet, dass** das ATM-Protokoll oder das MPEG-TS-Protokoll für die Fragmentierung der komprimierten Header-Pakete benutzt wird.

4. System zum robusten Übertragen eines Datenpaketstroms mit komprimierten Headern, das einen Sender und einen Empfänger umfasst, so dass der Sender Mittel zum Ausführen aller Schritte des Verfahrens nach einem der Ansprüche 1 bis 3 umfasst.

## Claims

1. A method for the robust transmission of a data stream in the form of packets Pᵢ comprising at least one header Hᵢ (302), said header being compressed (310, 312) through a first header compression step, said packets being fragmented into a succession of cells (307, 314), said cells (307, 314) having an identical fixed size, said fragmentation leading to the appearance of a padding section (311) in the last of said cells (314), said method being such that the space occupied by said padding section (311) is at least partially used to insert redundancy data, the purpose of said redundancy data being to increase the robustness of said compressed header to transmission errors, said redundancy data being obtained either by reducing the compression rate applied by said first header compression step to said header Hᵢ (302), said compression rate being determined on the basis of an estimate of the size of the compressed header packet or by means of the following steps:
a step of determining the size of the padding section (311) on the basis of the size of said compressed header packet and of the fixed size of said cells (307, 314);
a second step of compressing said header (302) with a compression rate that is determined so as to obtain a compressed header (312), the size of which is the closest possible integer that is lower than the size of said padding section (311) and which replaces the compressed header (310) that is initially present.

2. The method according to claim 1, **characterised in that** the ROHC protocol or the IPHC protocol is used for header compression.

3. The method according to any one of the preceding claims, **characterised in that** the ATM protocol or the MPEG-TS protocol is used for said fragmentation of the compressed header packets.

4. A system for the robust transmission of a stream of data packets with compressed headers comprising an emitter and a receiver, such that said emitter comprises means for executing all of the steps of the method according to any one of claims 1 to 3.
